# FASCICULE DE BREVET EUROPEEN

(11) **EP 2 688 010 B1**
(45) Date de publication et mention de la délivrance du brevet: **04.03.2020**
(21) Numéro de dépôt: 13177111.5
(22) Date de dépôt: 18.07.2013
(51) Int. Cl.: G06F 21/51, G06F 21/57

(54) **MISE À JOUR D'UN SYSTÈME D'EXPLOITATION POUR ÉLÉMENT SÉCURISÉ**
AKTUALISIERUNG EINES BETRIEBSSYSTEMS FÜR EIN GESICHERTES ELEMENT
UPDATE OF AN OPERATING SYSTEM FOR A SECURE ELEMENT

(30) Priorité: 20.07.2012 FR 1257062
(43) Date de publication de la demande: 22.01.2014
(73) Titulaire: IDEMIA France, 92700 Colombes (FR)
(72) Inventeur: Giraud, Christophe, 92700 COLOMBES (FR); Chamley, Olivier, 92700 COLOMBES (FR); Godel, Grégoire, 92700 COLOMBES (FR)
(74) Mandataire: Cabinet Beau de Loménie

(56) Documents cités:
- EP-A1- 2 330 507
- EP-A1- 2 453 352
- DE-A1- 19 925 389
- US-A1- 2009 064 125

## Description

### Arrière-plan de l'invention

La présente invention concerne le domaine des éléments sécurisés embarqués tels que les cartes à puce.

Un élément sécurisé embarqué, par exemple une carte à puce, présente typiquement l'architecture matérielle d'un ordinateur et comprend notamment un microprocesseur et une mémoire non-volatile comprenant des programmes d'ordinateurs exécutables par le microprocesseur. En particulier, la mémoire non-volatile comprend un système d'exploitation chargé par le fabriquant de l'élément sécurisé avant sa mise à disposition à un utilisateur.

Il peut être souhaitable d'effectuer une mise à jour du système d'exploitation après mise à disposition de l'élément sécurisé à l'utilisateur.

Le document WO 2012/062632 A1 décrit un procédé de mise à jour d'un logiciel dans un élément embarqué. Ce procédé comprend l'effacement du logiciel, le chargement d'un programme de gestion de mise à jour à la place du logiciel, qui charge un programme d'amorçage mis à jour lorsque l'élément embarqué démarre. La sécurité de cette solution est basée uniquement sur l'empreinte du logiciel. Cette solution n'est donc pas appropriée pour les applications qui nécessitent un degré de sécurité élevé. De plus, le procédé nécessite deux redémarrages de l'élément sécurisé.

Il existe donc un besoin pour une méthode de mise à jour fiable et sécurisée d'un logiciel d'un élément sécurisé.

Le document EP 2 453 352 A1 décrit un procédé de mise à jour d'un programme d'amorce et de firmware dans un élément embarqué. Le document DE 199 25 389 A1 décrit un procédé de chargement de nouveau code exécutable après une authentification d'un dispositif de mise à jour.

### Objet et résumé de l'invention

L'invention propose un élément sécurisé comprenant au moins un microprocesseur, une mémoire non-volatile et une interface de communication, l'élément sécurisé étant apte à communiquer avec un dispositif de mise à jour par l'interface de communication, la mémoire non-volatile mémorisant au moins un programme d'amorce, le microprocesseur étant configuré pour exécuter le programme d'amorce lors d'un démarrage de l'élément sécurisé, et étant caractérisé comme dans la revendication 1.

Le programme d'amorce permet donc la mise à jour du système d'exploitation, de manière sécurisée et fiable. En effet, comme cette mise à jour nécessite une authentification du dispositif de mise à jour, il est impossible pour un tiers de fournir une version corrompue du système d'exploitation à l'élément sécurisé.

L'étape d'authentification du dispositif de mise à jour comprend :
- une étape d'envoi d'un message contenant une variable vers le dispositif de mise à jour,
- une étape de réception des deuxièmes données d'authentification,
- une étape de détermination des premières données d'authentification en fonction de ladite variable et d'une clé mémorisée dans ladite mémoire non-volatile, et
- une étape de comparaison des premières données d'authentification et des deuxièmes données d'authentification.

Ainsi, le programme d'amorce comprend lui-même toutes les instructions nécessaires pour effectuer l'authentification du dispositif de mise à jour. La mise à jour du système d'exploitation peut donc être initiée ou poursuivie lorsque la mémoire non-volatile ne comprend pas de système d'exploitation ou lorsque le système d'exploitation a été désactivé, par exemple lors d'une tentative de mise à jour précédente n'ayant pas abouti.

Le programme d'amorce peut également comprendre des instructions pour l'exécution d'une étape d'envoi d'un message contenant une donnée cryptée en fonction de la clé et de ladite variable vers le dispositif de mise à jour.

Cela permet au dispositif de mise à jour d'authentifier l'élément sécurisé. Une authentification mutuelle entre l'élément sécurisé et le dispositif de mise à jour est donc réalisée. Ainsi, seul un élément sécurisé authentifié peut obtenir la nouvelle version du système d'exploitation.

Si la mémoire non-volatile comprend un système d'exploitation actif, ce système d'exploitation inclut des instructions pour l'exécution de :
- une étape d'envoi d'un message contenant la variable vers le dispositif de mise à jour,
- une étape de réception des deuxièmes données d'authentification,
- le cas échéant, une étape d'envoi d'un message contenant une donnée cryptée en fonction de la clé et de la variable vers le dispositif de mise à jour.

Dans ce cas, si la mémoire non-volatile comprend un système d'exploitation actif, celui-ci comprend les instructions lui permettant de participer à l'authentification, en collaboration avec le programme d'amorce. La mise à jour du système d'exploitation peut donc être initiée lors du fonctionnement normal de l'élément sécurisé, lorsque son fonctionnement et géré par le système d'exploitation.

L'étape de mémorisation peut comprendre la réception du nouveau système d'exploitation de manière cryptée.

Ainsi, un tiers qui intercepte la communication entre le dispositif de mise à jour et l'élément sécurisé ne peut pas obtenir la nouvelle version du système d'exploitation.

Dans ce cas, l'étape d'authentification peut comprendre la détermination d'une clé de session en fonction de ladite clé et de ladite variable, et l'étape de mémorisation peut comprendre la réception du nouveau système d'exploitation crypté avec ladite clé de session.

Comme la même clé de session est utilisée pour l'authentification et la communication cryptée, les ressources cryptographiques nécessaires dans l'élément sécurisé sont limitées.

Pour des raisons de sécurité et de fiabilité, le programme d'amorce est de préférence mémorisé de manière non-modifiable.

Par exemple, le programme d'amorce est mémorisé dans une partie non réinscriptible de la mémoire non-volatile.

En variante, le programme d'amorce est mémorisé dans une partie réinscriptible de la mémoire non-volatile, la mémoire non-volatile contenant un système d'exploitation configuré pour bloquer les commandes d'écriture sur le programme d'amorce.

L'invention propose aussi un terminal comprenant au moins un microprocesseur, une mémoire non-volatile et un élément sécurisé conforme à la revendication 1, la mémoire non-volatile du terminal comprenant un programme de gestion de mise à jour et une application destinée à utiliser un service fourni par l'élément sécurisé, le programme de gestion de mise à jour des instructions pour l'exécution :
- une étape de transmission comprenant la réception du nouveau système d'exploitation du dispositif de mise à jour et l'envoi du nouveau système d'exploitation reçu vers l'élément sécurisé,
- une étape de désactivation dudit service pendant au moins l'étape de transmission, lorsque lesdites instructions sont exécutées par le microprocesseur du terminal.

L'invention fournit aussi un système comprenant au moins un élément sécurisé conforme à l'invention et un dispositif de mise à jour mémorisant la nouvelle version du système d'exploitation.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système incluant un élément sécurisé selon un mode de réalisation de l'invention,
- la figure 2 représente les principales étapes correspondant à l'exécution du programme d'amorce de l'élément sécurisé de la figure 1,
- la figure 3 représente les interactions dans le système de la figure 1 lors de la mise à jour du système d'exploitation de l'élément sécurisé,
- les figures 4A, 4B, 4C et 4D représente l'état de la mémoire non-volatile de l'élément sécurisé de la figure 1, à différents instants,
- les figures 5A, 5B, 5C et 5D représente la mémoire non-volatile de l'élément sécurisé de la figure 1 afin d'illustrer le traitement de commandes, et
- les figures 6 et 7 illustrent un exemple de détermination de blocs contenant, de manière cryptée, une nouvelle version d'un système d'exploitation.

### Description détaillée d'un mode de réalisation

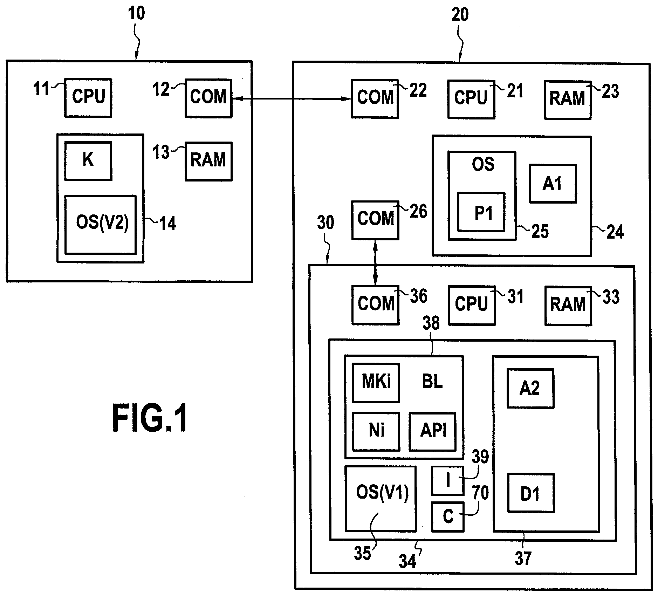

La **figure 1** représente un système qui comprend un dispositif de mise à jour 10, un terminal 20 et un élément sécurisé 30 embarqué dans le terminal 20.

Le dispositif de mise à jour 10 présente l'architecture matérielle d'un ordinateur et comprend notamment un microprocesseur 11, une interface de communication 12, une mémoire volatile 13 et une mémoire non-volatile 14. Le microprocesseur 11 permet l'exécution de programmes d'ordinateurs mémorisés dans la mémoire non-volatile 14, en utilisant la mémoire volatile 13 comme espace de travail. L'interface de communication 12 permet de communiquer avec le terminal 20.

La mémoire non-volatile 14 mémorise notamment une nouvelle version d'un système d'exploitation pour élément sécurisé, notée OS(V2), ainsi qu'une clé secrète K.

Le dispositif de mise à jour 10 est par exemple un serveur de mise à jour se trouvant dans les locaux d'un fabriquant d'éléments sécurisés. Dans ce cas, l'interface de communication 12 permet d'établir une communication avec le terminal 20 en passant par un réseau de télécommunications, par exemple par Internet. En variante, le dispositif de mise à jour 10 peut être lui-même un élément sécurisé, par exemple une carte SD, une carte NFC ou une mémoire USB. Dans ce cas, l'interface de communication 12 permet d'établir une communication avec le terminal 20 en passant par un lecteur d'élément sécurisé.

Le terminal 20 est par exemple un terminal portable appartenant à un utilisateur, par exemple un téléphone portable.

Le terminal 20 présente l'architecture matérielle d'un ordinateur et comprend notamment un microprocesseur 21, une interface de communication 22, une mémoire volatile 23, une mémoire non-volatile 24 et une interface de communication 26. Le microprocesseur 21 permet l'exécution de programmes d'ordinateurs mémorisés dans la mémoire non-volatile 24, en utilisant la mémoire volatile 23 comme espace de travail. L'interface de communication 22 permet de communiquer avec le dispositif de mise à jour 10. L'interface de communication 26 permet de communiquer avec l'élément sécurisé 30.

La mémoire non-volatile 24 mémorise notamment le système d'exploitation 25 du terminal 20, un programme P1 de gestion de mise à jour, et des données et des applications de l'utilisateur, dont une application A1 est représentée.

Le programme P1 a pour fonction de gérer la communication entre l'élément sécurisé 30 et le dispositif de mise à jour 10, afin de permettre la mise à jour du système d'exploitation de l'élément sécurisé 30. Le programme P1 est de préférence un module intégré au système d'exploitation 25 du terminal 20, comme représenté sur la figure 1.

L'élément sécurisé 30 est par exemple une carte à puce logée de manière amovible dans le terminal 20.

L'élément sécurisé 30 présente l'architecture matérielle d'un ordinateur et comprend notamment un microprocesseur 31, une interface de communication 36, une mémoire volatile 33 et une mémoire non-volatile 34. Le microprocesseur 31 permet l'exécution de programmes d'ordinateurs mémorisés dans la mémoire non-volatile 34, en utilisant la mémoire volatile 33 comme espace de travail. L'interface de communication 36 permet de communiquer avec le terminal 20.

La mémoire non-volatile 34 mémorise notamment un programme d'amorce 38 (noté BL pour « *Boot Loader»*), un système d'exploitation 35, des données d'utilisateur 37, une clé MKᵢ, un numéro de série Nᵢ, un indicateur d'état 39 du système d'exploitation 35, et une variable 70 représentant la valeur d'un compteur d'authentification C.

Le système d'exploitation 35 est, dans l'état représenté, une première version notée OS(V1) différente de la version OS(V2) mémorisée par le dispositif de mise à jour 10.

L'indicateur d'état 39 du système d'exploitation 35 peut prendre une valeur « actif » ou « inactif ». Il s'agit par exemple d'un bit de statut mémorisé dans le système d'exploitation 35 ou ailleurs dans la mémoire non-volatile 34. Son rôle est décrit ci-après.

Le compteur d'authentification C est initialisé à une valeur déterminée, par exemple 50. Lors du processus de mise à jour du système d'exploitation, le compteur C est décrémenté. A la fin du processus de mise à jour, si celui-ci a abouti, le compteur est réinitialisé. Si la valeur du compteur C descend sous un certain seuil, par exemple 3, cela signifie que de trop nombreuses tentatives de mise à jour du système d'exploitation 35 ont échouées. Dans ce cas, le processus de mise à jour est bloqué. Il n'est alors plus possible de mettre à jour le système d'exploitation 35 en communiquant avec le dispositif de mise à jour 10. Cependant, il peut être possible de réinitialiser l'élément sécurisé et d'y charger un nouveau système d'exploitation en se rendant dans un fournisseur de service disposant de droits d'accès spécifiques.

La clé MKᵢ et le numéro de série Nᵢ correspondent à la clé secrète K mémorisée par le dispositif de mise à jour 10, et sont par exemple mémorisés dans le programme d'amorce 38. Plus précisément, le dispositif de mise à jour 10 comprend des moyens de dérivation permettant de déterminer une clé MKᵢ correspondant au numéro de série Nᵢ d'un élément sécurisé i, selon une procédure gardée secrète. Dans une variante non représentée, le dispositif de mise à jour 10 mémorise les clés MKᵢ et les numéros de série Nᵢ d'une pluralité d'éléments sécurisés. Dans les deux cas, le dispositif de mise à jour 10 peut déterminer la clé MKᵢ associée à un numéro de série Nᵢ.

Les données d'utilisateur 37 comprennent notamment des applications, dont une application A2 est représentée, et des données personnelles dont un ensemble D1 est représenté. Le système d'exploitation 35 permet la gestion des applications hébergées sur l'élément sécurisé 30. Ces applications sont par exemple des applications sécurisées permettant l'accès à des services de paiement et de transport, et exploitant une interface de communication du terminal 20 de type NFC.

Le programme d'amorce 38 contient notamment une interface de programmation API permettant une interaction entre le programme d'amorce 38 et le système d'exploitation 35 lors de leur exécution.

La communication entre le terminal 20 et l'élément sécurisé 30, par les interfaces de communication 26 et 36 est par exemple basée sur l'échange d'unité ADPU conformément à la norme ISO/IEC 7816-4.

Le microprocesseur 31 est configuré pour exécuter le programme d'amorce 38 lors du démarrage de l'élément sécurisé 30. En fonctionnement normal, le programme d'amorce 38 lance alors l'exécution du système d'exploitation 35. Le système d'exploitation 35 gère alors l'exécution d'applications et l'interprétation de commandes reçues par l'interface 36.

Le programme d'amorce 38 est mémorisé de manière non modifiable. Par exemple, le programme d'amorce 38 est mémorisée dans une partie de la mémoire non-volatile 34 de type ROM. Dans ce cas, le programme d'amorce 38 peut faire partie du programme d'amorce initial, utilisé par le fabriquant de l'élément sécurisé 30 pour charger le système d'exploitation 35 lors de la mise en service de l'élément sécurisé 30. En variante, le programme d'amorce 38 est mémorisée dans une partie de la mémoire non-volatile 24 réinscriptible, par exemple de type mémoire Flash. Dans ce cas, le système d'exploitation 35 est configuré pour bloquer toute commande d'écriture dans cette partie de la mémoire.

On décrit maintenant le fonctionnement du système de la figure 1, en particulier la mise à jour du système d'exploitation 35 afin de remplacer la première version OS(V1) par la deuxième version OS(V2).

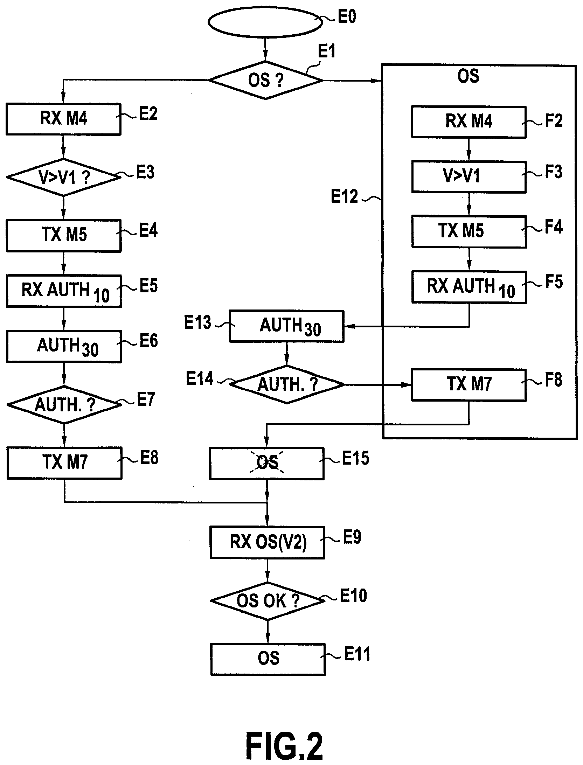

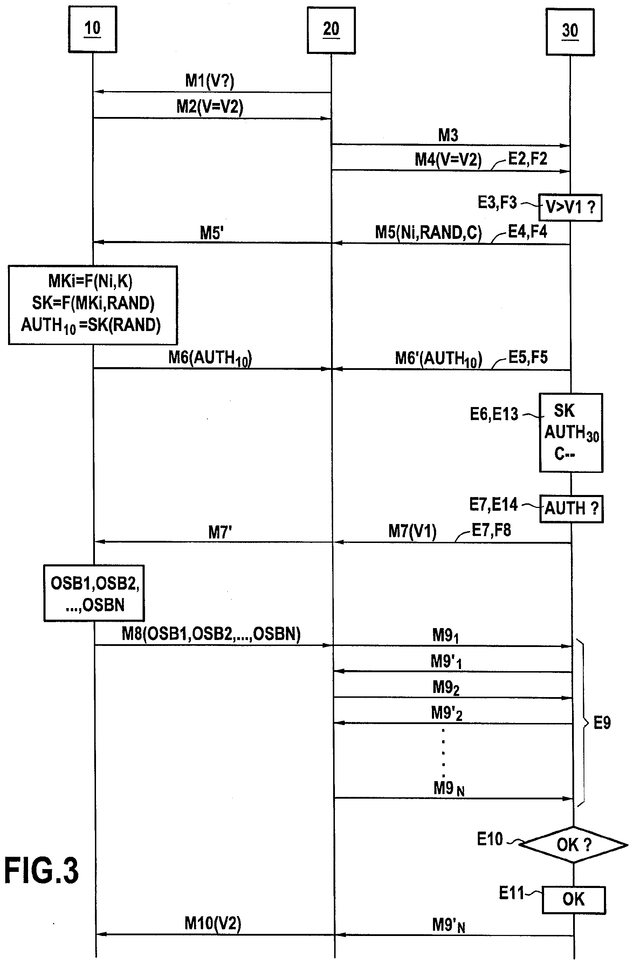

La **figure 2** est un diagramme d'étapes qui représente les principales étapes d'un procédé de fonctionnement de l'élément sécurisé 30, correspondant à l'exécution du programme d'amorce 38. La **figure 3** est un diagramme qui représente les messages échangés entre le dispositif de mise à jour 10, le terminal 20 et l'élément sécurisé 30 lors du procédé de fonctionnement de la figure 2.

Ce procédé de fonctionnement débute à l'étape E0 lors du démarrage de l'élément sécurisé 30. Comme expliqué précédemment, le microprocesseur 31 est configuré pour lancer l'exécution du programme d'amorce 38 lors du démarrage de l'élément sécurisé 30. Par exemple, le programme d'amorce 38 se trouve à un emplacement prédéterminé de la mémoire non-volatile 34, appelé secteur de démarrage, vers lequel pointe initialement le microprocesseur 31.

Ensuite, à l'étape E1, l'élément sécurisé 30 détermine si le système d'exploitation 35 est actif. Plus précisément, si la mémoire non-volatile 34 contient le système d'exploitation 35 et que l'indicateur d'état 39 présente la valeur « actif », alors on considère que le système d'exploitation 35 est actif. Au contraire, si la mémoire non-volatile 34 ne contient pas de système d'exploitation 35 ou que l'indicateur d'état 39 présente la valeur « inactif », on considère que le système d'exploitation 35 est inactif.

Si le système d'exploitation 35 est actif, alors, à l'étape E12, le programme d'amorce 38 lance l'exécution du système d'exploitation 35. Cela correspond au mode de fonctionnement normal de l'élément sécurisé 30, au cours duquel le système d'exploitation 35 gère l'exécution d'applications et les commandes reçues sur l'interface de communication 36.

Au contraire, si le système d'exploitation 35 est inactif, alors le programme d'amorce 38 ne lance pas l'exécution du système d'exploitation 35. Autrement dit, le programme d'amorce 38 reste maître. Cela a pour conséquence, notamment, que les commandes reçues sur l'interface de communication 36 sont gérées par le programme d'amorce 38.

Ainsi, lorsque le programme P1 de gestion de mise à jour du terminal 20 envoie des messages M3 et M4 destinés à lancer le processus de mise à jour du système d'exploitation 35, ces messages M3 et M4 sont reçus soit par le programme d'amorce 38 (étape E2) si le système d'exploitation 35 est inactif, soit par le système d'exploitation 35 (étape F2) s'il est actif. Ci-après, on décrit d'abord le processus de mise à jour du système d'exploitation 35 dans le cas où le système d'exploitation 35 est inactif (étapes E2 à E11), puis dans le cas où le système d'exploitation 35 est actif (étapes F2 à F5, E13, E14, F8, E15 et E9 à E11).

En référence à la figure 3, le terminal 20 envoie un message M1 au dispositif de mise à jour 10 pour lui demander la dernière version disponible du système d'exploitation. L'envoi du message M1 fait partie de l'exécution du programme P1 et est réalisé par exemple périodiquement ou lorsqu'une condition prédéterminée est satisfaite.

Le dispositif de mise à jour 10 répond au message M1 par un message M2 qui spécifie la version disponible : V=V2.

Ensuite, le terminal 20 envoie en message M3 vers l'élément sécurisé 30, pour sélectionner l'application de mise à jour, c'est-à-dire la partie du programme d'amorce 38 ou du système d'exploitation 35 responsable de l'exécution des étapes E2 et suivantes ou F2 et suivantes. Le message M3 est par exemple une commande de type ADPU nouvellement définie, appelée « OS loader Application Selection ».

Puis, le terminal 20 envoie un message M4 vers l'élément sécurisé 30, pour l'informer de la nouvelle version V2 disponible. Le message M4 est reçu, à l'étape E2, par l'élément sécurisé 30. Plus précisément, dans le présent exemple où le système d'exploitation est inactif, le message M4 est géré directement par le programme d'amorce 38. Le message M4 est par exemple une commande de type ADPU nouvellement définie, appelée « PUSH AVAILABLE VERSION ».

Ensuite, à l'étape E3, l'élément sécurisé 30 détermine la version du système d'exploitation. Par exemple, le programme d'amorce 38 interroge le système d'exploitation 35 en utilisant l'interface de programmation API. Si le système d'exploitation 35 est présent, il répond en donnant sa version V. Si aucun système d'exploitation n'est présent, le programme d'amorce 38 prend en compte une version V par défaut qu'il mémorise, et qui correspond à la version du système d'exploitation 35 initialement chargée dans l'élément sécurisé 30 par le fabriquant. L'élément sécurisé 30 vérifie alors que la version V reçue dans le message M4 est supérieure à la version actuelle du système d'exploitation 35, c'est-à-dire V1 dans cet exemple.

Si la version V reçue dans le message M4 est supérieure à la version actuelle du système d'exploitation 35, alors, à l'étape E4, l'élément sécurisé 30 envoie un message M5 vers le dispositif de mise à jour 10, par l'intermédiaire du terminal 20 qui le prolonge par un message M5'. Le message M5 contient le numéro de série Nᵢ de l'élément sécurisé 30, un nombre aléatoire RAND et la valeur du compteur d'authentification C (variable 70).

En fonction du numéro de série Ni contenu dans le message M5', le dispositif de mise à jour 10 détermine la clé MKᵢ correspondante, soit en fonction du numéro de série Nᵢ et de la clé secrète K, selon la procédure de dérivation précitée, soit en consultant la clé MKᵢ qu'il mémorise en correspondance avec le numéro de série Nᵢ reçu. Ensuite, le dispositif de mise à jour 10 détermine une clé de session SK en fonction de la clé MKᵢ déterminée et du nombre aléatoire RAND reçu, et des données d'authentification AUTH₁₀ par chiffrement du nombre aléatoire RAND avec la clé de session SK. Le dispositif de mise à jour 10 envoie alors un message M6 contenant les données d'authentification AUTH₁₀ vers l'élément sécurisé 30, par l'intermédiaire du terminal 20 qui le prolonge en un message M6'. Le message M6' est par exemple une commande de type ADPU nouvellement définie, appelée « MUTUAL AUTHENTICATION ».

Le message M6' est reçu par l'élément sécurisé 30 à l'étape E5. En réponse à la réception du message M6', l'élément sécurisé 30 détermine, à l'étape E6, une clé de session SK, normalement identique à la clé de session SK déterminée par le dispositif de mise à jour 10, en fonction du la clé maitre MKᵢ et du nombre aléatoire RAND, et des données d'authentification AUTH₃₀ par chiffrement du nombre aléatoire RAND avec la clé de session SK déterminée. L'élément sécurisé 30 décrémente également le compteur d'authentification C.

Ensuite, à l'étape E7, l'élément sécurisé 30 compare les données d'authentification AUTH₁₀ et AUTH₃₀. En cas de correspondance, une authentification, par l'élément sécurisé 30, du dispositif de mise à jour 10 a été réalisée, avec détermination d'une clé de session SK.

En cas d'authentification, à l'étape E8, l'élément sécurisé 30 envoie un message M7 vers le dispositif de mise à jour 10, par l'intermédiaire du terminal 20 qui le prolonge en un message M7'. Le message M7 est crypté avec la clé de session SK et contient la version actuelle V1 du système d'exploitation 35 déterminée à l'étape E3.

La réception du message M7' permet alors au dispositif de mise à jour 10 d'authentifier l'élément sécurisé 30. Par exemple, si la version est codée sur deux octets et que le message décrypté comprend 16 octets, le dispositif de mise à jour 10 peut authentifier l'élément sécurisé en vérifiant que les 14 premiers octets du message M7' décrypté sont nuls. Une authentification mutuelle entre l'élément sécurisé 30 et le dispositif de mise à jour 10 a donc été réalisée.

Ensuite, le dispositif de mise à jour 10 détermine N blocs OSB1, OSB2,... OSBN. Chaque bloc comprend une partie du système d'exploitation cryptée avec la clé de session SK. Le nombre N est choisi pour que la taille d'un bloc soit suffisamment limitée pour pouvoir être transmis dans une unique commande de type ADPU. Le dispositif de mise à jour 10 transmet alors les blocs déterminés au terminal 20, dans un ou plusieurs messages M8. Le terminal 20 mémorise les blocs reçus jusqu'à réception de tous les blocs.

Ensuite, le terminal 20 envoie une succession de messages M9₁, M9₂,...M9_{N} vers l'élément sécurisé 30, chaque message M9₁, M9₂,...M9_{N} contenant un des blocs OSB1, OSB2,... OSBN. Chaque bloc est décrypté par l'élément sécurisé 30, en utilisant la clé de session SK, et mémorisé à la place de la version V1 du système d'exploitation 35.

Chaque message M9ⱼ, pour j allant de 1 à N-1 est par exemple une commande de type ADPU nouvellement définie, appelée « LOAD BLOCK », auquel l'élément sécurisé 30 répond par un message d'acquittement M9ⱼ'. Le message M9_{N} est par exemple une commande de type ADPU nouvellement définie, appelée « LOAD LAST BLOCK ». La réception, par l'élément sécurisé 30, des messages M9₁, M9₂,...M9_{N} constitue une étape E9 de réception de la nouvelle version du système d'exploitation.

Après réception du dernier message M9_{N}, à l'étape E10, l'élément sécurisé 30 effectue une vérification de la nouvelle version du système d'exploitation reçue, par exemple par un test de contrôle de redondance cyclique.

Si le test est vérifié, à l'étape E11, l'élément sécurisé 30 réinitialise le compteur C, active le système d'exploitation 35 et lance son exécution. A ce stade, la nouvelle version du système d'exploitation 35 est donc exécutée par l'élément sécurisé 30.

Dans le cas où, à l'étape E1, on a déterminé que le système d'exploitation 35 est actif, le fonctionnement est similaire à celui décrit précédemment et on décrit maintenant les principales différences. A l'étape E12, l'élément sécurisé 30 exécute le système d'exploitation 35. Ainsi, comme expliqué précédemment, le message M4 reçu est géré par le système d'exploitation 35. Les étapes F2 à F5 de la figure 2 correspondent aux étapes E2 à E5 précédemment décrite, mais correspondent à l'exécution d'instructions du système d'exploitation 35 et non du programme d'amorce 38.

Après réception des données d'authentification AUTH₁₀, le système d'exploitation 35 interroge le programme d'amorce 38, par l'intermédiaire de l'interface de programmation API, pour qu'il vérifie les données d'authentification AUTH₁₀ lors d'étapes E13 et E14 similaires aux étapes E6 et E7. Ensuite, c'est le système d'exploitation 35 qui répond par le message M7 à l'étape F8. Puis, le système d'exploitation 35 repasse la main au programme d'amorce 38 à l'étape E15.

A l'étape E15, le programme d'amorce 38 désactive le système d'exploitation 35. Par exemple, le programme d'amorce efface le système d'exploitation 35 de la mémoire non-volatile 34, ou modifie la valeur de l'indicateur d'état 39 à « inactif ». Les étapes suivantes E9 à E11 sont similaires à celles précédemment décrites.

Les étapes E1 à E15 correspondent à l'exécution, par le microprocesseur 31, d'instructions du programme d'amorce 38. Les étapes F2 à F5 et F8 correspondent à l'exécution, par le microprocesseur 31, d'instructions du système d'exploitation 35.

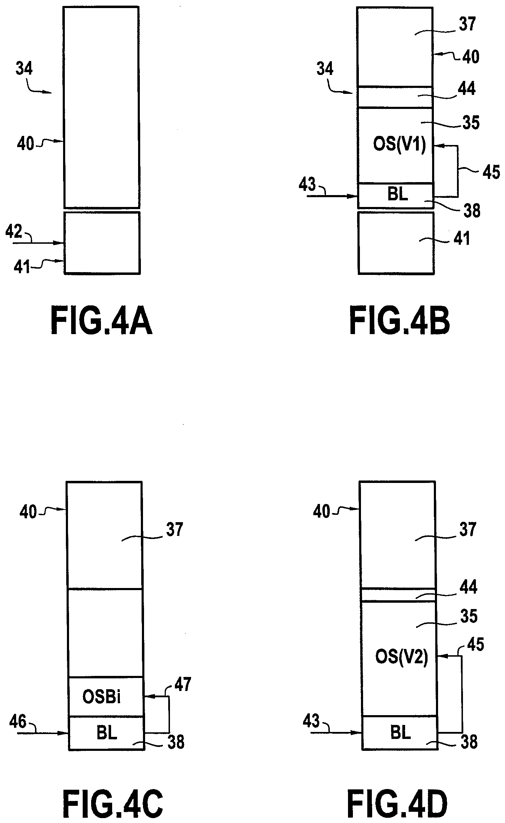

Les **figures 4A à 4D** représente le contenu de la mémoire non-volatile 34 à différents instants du processus de fabrication de l'élément sécurisé 30 et de la mise à jour du système d'exploitation 35. Les figures 4A et 4B montrent que, dans cet exemple, la mémoire non-volatile 34 comprend une partie 40 réinscriptible, par exemple de type mémoire Flash, et une partie 41 non réinscriptible de type ROM.

La figure 4A représente l'état initial de la mémoire non-volatile 34. La partie 40 est vide et la partie 41 comprend le programme d'amorce initial du fabriquant de la carte. Dans cet état initial, le microprocesseur 31 est configuré pour lancer l'exécution de ce programme d'amorce initial lors du démarrage de l'élément sécurisé 30, comme le représente la flèche 42. Le programme d'amorce initial a pour fonction de permettre le chargement du programme d'amorce 38, du système d'exploitation 35 et des données d'utilisateur 37 dans la partie 40 de la mémoire non-volatile 34, lors de la personnalisation de l'élément sécurisé 30 par le fabriquant.

La figure 4B représente l'état de la mémoire non-volatile 34 après personnalisation de l'élément sécurisé 30 par le fabriquant. La partie 40 comprend le programme d'amorce 38, le système d'exploitation 35 (version OS(V1)), des données d'utilisateur 37 et une zone non-utilisée 44. Le programme d'amorce initiale de la partie 41 a été désactivé et le microprocesseur 31 est configuré pour lancer l'exécution du programme d'amorce 38 lors du démarrage de l'élément sécurisé 30, comme le représente la flèche 43. Dans cet état, le système d'exploitation 35 est activé et le programme d'amorce 38 lance donc l'exécution du système d'exploitation 35, comme représenté par la flèche 45. Cela correspond aux étapes E0, E1 et E12 décrites précédemment.

La figure 4C représente la partie 40 de la mémoire non-volatile 34 au cours du processus de mise à jour du système d'exploitation 35. Plus précisément, dans l'état de la figure 4C, le système d'exploitation 35 a été désactivé (étape E15 de la figure 2), soit par effacement soit par modification de l'indicateur d'état 39. Le programme d'amorce 38 reçoit des messages M9ᵢ, ce qui est représenté par la flèche 46, et mémorise les blocs OSBi contenus dans ces messages à la place de l'ancienne version du système d'exploitation 35, comme représenté par la flèche 47. Ceci correspond à l'étape E9 de la figure 2.

La figure 4D représente la partie 40 de la mémoire non-volatile 34 après la mise à jour du système d'exploitation 35 (étape E11 de la figure 2). La partie 40 comprend le programme d'amorce 38, le système d'exploitation 35 dans la version OS(V2), les données d'utilisateur 37 et une zone non-utilisée 44. Comme les versions OS(V1) et OS(V2) du système d'exploitation 35 n'ont pas nécessairement la même taille, la zone non-utilisée 44 peut être de taille différente entre la figure 4D et la figure 4B. Dans l'état représenté, le système d'exploitation 35 est activé. Le microprocesseur 31 est configuré pour lancer l'exécution du programme d'amorce 38 lors du démarrage de l'élément sécurisé, comme le représente la flèche 43. Dans cet état, le système d'exploitation 35 est activé et le programme d'amorce 38 lance donc l'exécution du système d'exploitation 35, comme représenté par la flèche 45.

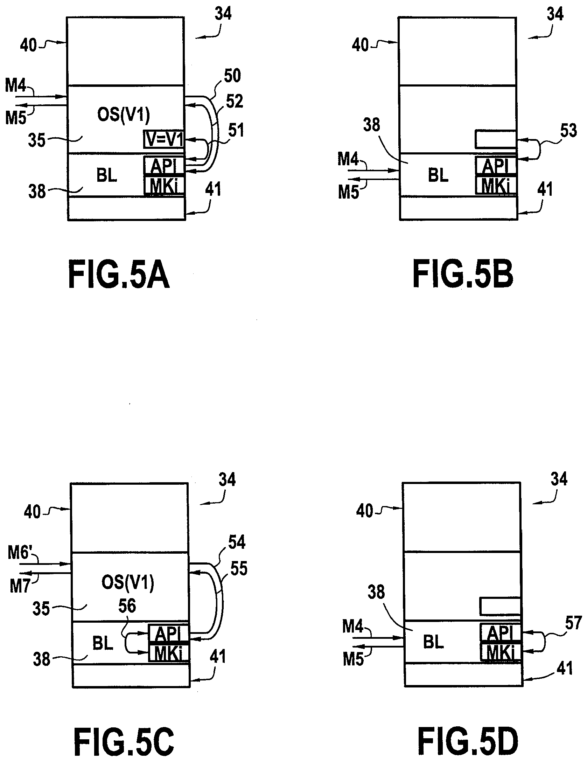

Les figures **5A à 5D** illustrent un exemple du traitement des messages M4 (commande ADPU « PUSH AVAILABLE VERSION ») et M6' (commande ADPU « MUTUAL AUTHENTICATION ») par l'élément sécurisé 30.

En particulier, la figure 5A illustre le traitement d'un message M4 (commande ADPU « PUSH AVAILABLE VERSION ») lorsque le système d'exploitation 35 est actif. La réception du message M4 correspond donc à l'étape F2 de la figure 2. En réponse au message M4, le système d'exploitation 35 interroge le programme d'amorce 38 pour déterminer la version du système d'exploitation 35 (flèche 50). Le programme d'amorce 38 consulte alors l'information de version dans le système d'exploitation 35 (flèche 51) et répond au système d'exploitation (flèche 52). Ces échanges sont réalisés grâce à l'interface de programmation API. Ensuite, le système d'exploitation 35 répond par un message M5, ce qui correspond à l'étape F4 de la figure 2.

A titre de comparaison, la figure 5B illustre le traitement d'un message M4 (commande ADPU « PUSH AVAILABLE VERSION ») lorsque le système d'exploitation 35 est inactif. Dans cet exemple, le système d'exploitation 35 a été effacé. La réception du message M4 correspond à l'étape E2 de la figure 2. En réponse au message M4, le programme d'amorce 38 tente d'interroger le système d'exploitation 35 pour déterminer la version du système d'exploitation 35 (flèche 53). Comme le système d'exploitation 35 a été effacé, le programme d'amorce 38 ne reçoit pas de réponse et utilise donc la version par défaut qu'il mémorise. Ensuite, le programme d'amorce 38 répond par un message M5, ce qui correspond à l'étape E4 de la figure 2.

La figure 5C illustre le traitement d'un message M6' (commande ADPU « MUTUAL AUTHENTICATION ») lorsque le système d'exploitation 35 est actif. La réception du message M6' correspond donc à l'étape F5 de la figure 2. En réponse au message M6', le système d'exploitation 35 interroge le programme d'amorce 38 pour vérifier les données d'authentification AUTH₁₀ du dispositif de mise à jour 10 (flèche 54). Le programme d'amorce 38 vérifie les données d'authentification AUTH₁₀ en utilisant la clé maître MKᵢ (flèche 56). Ceci correspond aux étapes E13 et E14 de la figure 2. Le programme d'amorce 38 confirme l'authentification au système d'exploitation (flèche 55). Ensuite, le système d'exploitation 35 répond par un message M7, ce qui correspond à l'étape F8 de la figure 2.

A titre de comparaison, la figure 5D illustre le traitement d'un message M6' (commande ADPU « MUTUAL AUTHENTICATION ») lorsque le système d'exploitation 35 est inactif. La réception du message M6' correspond donc à l'étape E5 de la figure 2. En réponse au message M6', le programme d'amorce 38 vérifie les données d'authentification AUTH₁₀ en utilisant la clé maître MKᵢ (flèche 57). Ceci correspond aux étapes E6 et E7 de la figure 2. Le programme d'amorce 38 confirme l'authentification et répond par un message M7, ce qui correspond à l'étape E8 de la figure 2.

On a décrit, en référence aux figures 2 et 3, la réalisation d'une authentification mutuelle et d'une communication cryptée entre l'élément sécurisé 30 et le dispositif de mise à jour 10. L'homme du métier est capable de choisir des formats de clés et des algorithmes cryptographiques appropriés pour réaliser ces fonctions. Ci-après, on en donne un exemple non limitatif.

Le dispositif de mise à jour 10 mémorise une clé secrète K de 32 octets. Lorsqu'il reçoit un numéro de série Nᵢ de 16 octets, le dispositif de mise à jour 10 peut déterminer la clé MKᵢ de 32 octets correspondant à l'élément sécurisé 30 dont le numéro de série est Nᵢ, en fonction de K et de Nᵢ. L'algorithme permettant de calculer MKᵢ en fonction de K et Nᵢ peut être choisi par les concepteurs du système et gardé secret pour améliorer la sécurité. L'utilisation du numéro de série Nᵢ permet de différencier les données d'authentification et le cryptage pour différents éléments sécurisés. L'élément sécurisé mémorise directement la clé MKᵢ et ne doit donc pas calculer MKᵢ en fonction de K et Nᵢ.

La clé de session SK peut être déterminée en utilisant l'algorithme AES-256, en fonction de la clé MKᵢ et du numéro aléatoire RAND de 32 octets. Le dispositif de mise à jour 10 et l'élément sécurisé 30 calculent tous les deux : SK = AES-2S6(MKᵢ, RAND).

A la place du numéro aléatoire RAND, on peut utiliser une autre variable (variable pseudo-aléatoire, date, numéro incrémental...)

Les données d'authentification AUTH₁₀ et AUTH₃₀ peuvent également être déterminées en utilisant l'algorithme AES-256, en fonction de la clé de session SK et du numéro aléatoire RAND. Ainsi, le dispositif de mise à jour 10 calcule AUTH₁₀ = AES-256(SK, RAND). De manière correspondante, l'élément sécurisé 30 calcule AUTH₃₀ = AES-256(SK, RAND). En comparant les données d'authentification AUTH₁₀ reçues et les données d'authentification AUTH₃₀ déterminées, l'élément sécurisé 30 effectue une authentification du dispositif de mise à jour 10.

Le message M7 envoyé par l'élément sécurisé 30 vers le dispositif de mise à jour 10 comprend la version actuelle V1 du système d'exploitation 35 cryptée par la clé de session SK en utilisant l'algorithme AES-256-CBC-IS09797-M1 : M7 = AES-256-CBC-IS09797-M1 (SK, V1). Cela permet une authentification de l'élément sécurisé 30 par le dispositif de mise à jour 10. A cet effet, on utilise le mode CBC (« *Cipher-block chaining* ») et on utilise un cryptogramme ICV qui est déterminé en fonction du numéro aléatoire RAND. Par exemple, ICV est déterminé en appliquant l'algorithme AES-256 à 16 octets centraux du numéro aléatoire RAND.

Ainsi, une authentification mutuelle entre l'élément sécurisé 30 et le dispositif de mise à jour 10 peut être réalisée.

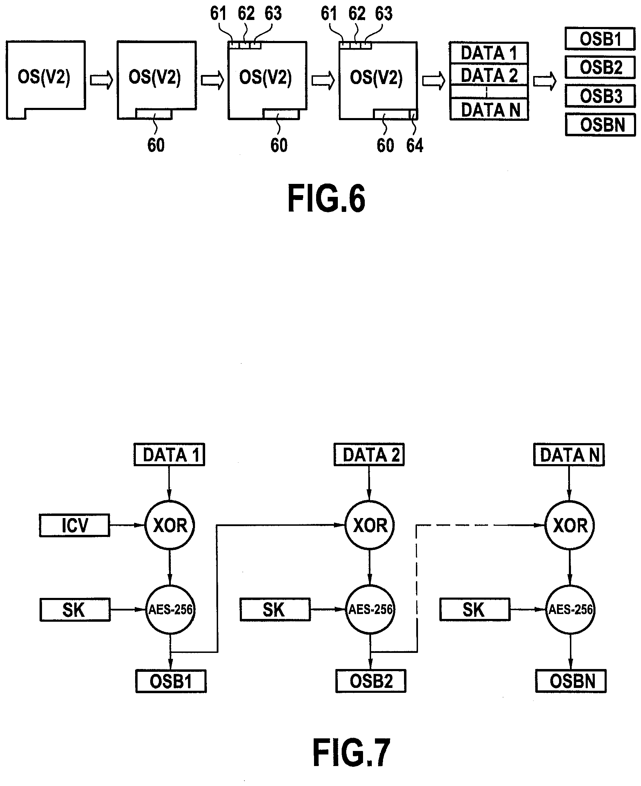

Les **figures 6 et 7** illustrent un exemple de détermination, par le dispositif de mise à jour 10, des blocs OSB1, OSB2,... OSBN qui contiennent, de manière cryptée, la nouvelle version OS(V2) du système d'exploitation 35.

Le code du système d'exploitation, noté OS(V2), est un ensemble de données non cryptées contenant notamment des instructions exécutables par le microprocesseur 31. Le dispositif de mise à jour 10 rajoute une empreinte 60 à la fin du code OS(V2). L'empreinte 60 est par exemple déterminée en utilisant l'algorithme SHA-512.

Ensuite, le dispositif de mise à jour 10 rajoute, au début du code OS(V2), un numéro secret 61, la taille 62 du code OS(V2) et la version 63 du système d'exploitation du code OS(V2). Le numéro secret 61 est par exemple codé sur quatre octets et est connu du dispositif de mise à jour 10 et de l'élément sécurisé 30. Il offre une sécurité supplémentaire lors de la vérification, par l'élément sécurisé 30, du système d'exploitation reçu. La taille 61 est par exemple codée sur quatre octets. La version 63 du système d'exploitation du code OS(V2) est par exemple codée sur deux octets.

Ensuite, le dispositif de mise à jour 10 rajoute, à la fin de l'ensemble formé par le numéro secret 61, la taille 62, la version 63, le code OS(V2) et l'empreinte 61, des données de remplissage 64 (par exemple des octets de valeurs « 0 ») pour atteinte un nombre d'octets total qui soit un multiple N de 16. Il est donc possible de décomposer l'ensemble de données formé en N blocs Data1, Data2,... DataN de 16 octets, qui contiennent le code OS(V2) de manière non cryptée.

A partir des blocs Data1, Data2,... DataN, le dispositif de mise à jour 10 détermine les blocs OSB1, OSB2,... OSBN qui contiennent le code OS(V2) de manière cryptée, par exemple de la manière illustrée sur la figure 7.

Sur la figure 7, ICV est un cryptogramme déterminé en fonction du numéro aléatoire RAND. Par exemple, ICV est déterminé en appliquant l'algorithme AES-256 à 16 octets centraux du numéro aléatoire RAND.

Ensuite, le chiffrement des blocs Data1, Data2,... DataN est effectué par l'algorithme AES-256 en mode CBC (« *Cipher-block chaining* ») en utilisant la clé SK et le cryptogramme ICV. Ainsi, le cryptogramme ICV et le bloc Data1 sont combinés par une opération XOR (OU exclusif). Puis, le résultat de cette opération XOR est crypté en utilisant la clé de session SK et l'algorithme AES-256 pour déterminer le bloc OSB1.

Pour chaque bloc Data(i) suivant, on détermine le bloc OSB(i) correspondant de manière similaire, mais en utilisant le bloc OSB(i-1) à la place du cryptogramme ICV.

Après avoir reçu chaque bloc OSB(i), à l'étape E9 de la figure 2, l'élément sécurisé 30 peut décrypter les données reçues avec la clé de session SK. Ensuite, à l'étape E10, la vérification notamment de l'empreinte 60 et du numéro secret 61 permet de détecter une corruption éventuelle.

Le système de la figure 1 présente plusieurs avantages.

En particulier, il est possible de mettre à jour le système d'exploitation 35 de l'élément sécurisé 30. Cette mise à jour peut être effectuée alors que l'élément sécurisé 30 est déjà en fonctionnement dans le terminal 20 d'un utilisateur. Dans le cas d'une communication entre le terminal 20 et le dispositif de mise à jour 10 passant par un réseau de télécommunication, l'utilisateur ne doit pas se rendre dans un lieu déterminé comme la boutique d'un fournisseur de service. Le système d'exploitation 35 peut être remplacé dans son entièreté. Au cours de la mise à jour, les données d'utilisateur 37 ne sont pas modifiées. Ainsi, après mise à jour, l'utilisateur dispose toujours de ses applications et de ses données personnelles. De plus, le fonctionnement du terminal 20 ne doit pas être interrompu.

Grâce à l'authentification mutuelle du dispositif de mise à jour 10 et de l'élément sécurisé 30, et à la communication cryptée entre le dispositif de mise à jour 10 et l'élément sécurisé 30, il n'est pas possible pour un tiers d'obtenir la nouvelle version OS(V2) du système d'exploitation ni de fournir une version corrompue à l'élément sécurisé 30 en se faisant passer pour le dispositif de mise à jour 10. En particulier, si le programme P1 du terminal 20 est remplacé par une version corrompue, cette version peut au mieux obtenir les blocs OSB(i) cryptés. Autrement dit, la confidentialité et l'intégrité du système d'exploitation sont protégées. Ces caractéristiques peuvent permettre d'obtenir une certification de l'élément sécurisé et/ou du système.

Le dispositif de mise à jour 10 peut compter les tentatives d'authentification mutuelle ayant échoué. Si ce nombre atteint un seuil déterminé, le dispositif de mise à jour 10 peut prendre une mesure de protection, par exemple émettre un avertissement ou mettre l'élément sécurisé dans une liste noire.

Comme l'authentification mutuelle et le cryptage sont basés sur un numéro de série de l'élément sécurisé, ils sont diversifiés par élément sécurisé. Une faille n'affecte donc pas l'ensemble des éléments sécurisés liés au dispositif de mise à jour.

Le numéro aléatoire RAND est généré par l'élément sécurisé, et non par le dispositif de mise à jour 10. Cela limite la charge de travail imposée au dispositif de mise à jour, ce qui est particulièrement intéressant dans le cas d'un dispositif de mise à jour en relation avec de nombreux éléments sécurisés.

L'utilisation d'une même clé de session SK pour l'authentification mutuelle et la communication cryptée entre l'élément sécurisé et le dispositif de mise à jour permet de limiter les ressources nécessaires au niveau de l'élément sécurisé. Toutefois, dans une variante de réalisation, l'authentification mutuelle et la communication cryptée utilisent des clés différentes.

La présence du programme P1 sur le terminal 20 permet d'adapter le comportement du terminal 20 lors de la mise à jour du système d'exploitation. Par exemple, les applications du terminal 20 qui font appel à des applications de l'élément sécurisé 30 peuvent être désactivées pendant la mise à jour.

## Revendications

1. Elément sécurisé (30) comprenant au moins un microprocesseur (31), une mémoire non-volatile (34) et une interface de communication (36), l'élément sécurisé (30) étant apte à communiquer avec un dispositif de mise à jour (10) par l'interface de communication (36), la mémoire non-volatile (34) mémorisant au moins un programme d'amorce (38), le microprocesseur (31) étant configuré pour exécuter le programme d'amorce (38) lors d'un démarrage de l'élément sécurisé (30),
**caractérisé en ce que** le programme d'amorce (38) comprend des instructions pour l'exécution de :
- une étape de démarrage (E1, E12) pour déterminer si la mémoire non-volatile (34) mémorise un système d'exploitation (35) actif,
- une étape d'authentification du dispositif de mise à jour (10), comprenant :
- une détermination (E6, E13) de premières données d'authentification (AUTH₃₀) en fonction d'une variable (RAND) et d'une clé (MKi) mémorisée dans ladite mémoire non-volatile (34), et
- une comparaison (E7, E14) des premières données d'authentification (AUTH₃₀) et de deuxièmes données d'authentification (AUTH₁₀) reçues du dispositif de mise à jour (10), puis
- si la mémoire non-volatile (34) mémorise un système d'exploitation (35) actif, une étape (E15) de désactivation du système d'exploitation (35), et
- en cas d'authentification du dispositif de mise à jour (10), une étape (E9, E10) de mémorisation d'un nouveau système d'exploitation reçu du dispositif de mise à jour (10) dans la mémoire non-volatile (34) et une étape (E11) d'activation du nouveau système d'exploitation,
lorsque lesdites instructions sont exécutées par le microprocesseur (31),
l'élément sécurisé étant en outre **caractérisé en ce que** :
- si la mémoire non-volatile (34) mémorise un système d'exploitation (35) actif, le programme d'amorce (38) lance l'exécution du système d'exploitation (35) de sorte que le système d'exploitation gère l'exécution d'applications et les commandes reçues sur l'interface de communication (36), et l'étape d'authentification du dispositif de mise à jour (10), comprend :
- un envoi (F4), par le système d'exploitation (35), d'un message (M5) contenant la variable (RAND) vers le dispositif de mise à jour (10), et
- une réception (F5), par le système d'exploitation (35), des deuxièmes données d'authentification (AUTH10),
- une interrogation, par le système d'exploitation (35), du programme d'amorce (38) pour que le programme d'amorce (38) vérifie les deuxièmes données d'authentification (AUTH10),
- si le système d'exploitation (35) est inactif, le programme d'amorce (38) reste maître de sorte que les commandes reçues sur l'interface de communication sont gérées par le programme d'amorce (38), et l'étape d'authentification du dispositif de mise à jour comprend :
- un envoi (E4), par le programme d'amorce (38), d'un message (M5) contenant la variable (RAND) vers le dispositif de mise à jour (10),
- une réception (E5), par le programme d'amorce (38), des deuxièmes données d'authentification (AUTH10).

2. Elément sécurisé (30) selon la revendication 1, dans lequel le programme d'amorce (38) comprend des instructions pour l'exécution d'une étape d'envoi (E8) d'un message (M7) contenant une donnée (V1) cryptée en fonction de la clé (MKᵢ) et de ladite variable (RAND) vers le dispositif de mise à jour (10).

3. Elément sécurisé (30) selon la revendication 1, dans lequel le système d'exploitation (35) inclut des instructions pour l'exécution d'une étape d'envoi (F8) d'un message (M7) contenant une donnée (V1) cryptée en fonction de la clé (MKᵢ) et de ladite variable (RAND) vers le dispositif de mise à jour (10).

4. Elément sécurisé (30) selon l'une des revendications 1 à 3, dans lequel l'étape de mémorisation comprend la réception du nouveau système d'exploitation de manière cryptée.

5. Elément sécurisé (30) selon la revendication 4, dans lequel l'étape d'authentification comprend la détermination d'une clé de session (SK) en fonction de ladite clé (MK_{¡}) et de ladite variable, l'étape de mémorisation comprenant la réception du nouveau système d'exploitation crypté avec ladite clé de session (SK).

6. Elément sécurisé (30) selon l'une des revendications 1 à 5, dans lequel le programme d'amorce (38) est mémorisé dans une partie non réinscriptible (41) de la mémoire non-volatile (34).

7. Elément sécurisé (30) selon l'une des revendications 1 à 5, dans lequel le programme d'amorce (38) est mémorisé dans une partie réinscriptible (40) de la mémoire non-volatile (34), la mémoire non-volatile (34) contenant un système d'exploitation (35) configuré pour bloquer les commandes d'écriture sur le programme d'amorce (38).

8. Terminal (20) comprenant au moins un microprocesseur (21), une mémoire non-volatile (24) et un élément sécurisé (30) selon l'une des revendications 1 à 7, la mémoire non-volatile (24) du terminal (20) comprenant un programme (P1) de gestion de mise à jour et une application (A1) destinée à utiliser un service fourni par l'élément sécurisé (30), le programme (P1) de gestion de mise à jour comprenant des instructions pour l'exécution :
- une étape de transmission comprenant la réception du nouveau système d'exploitation du dispositif de mise à jour (10) et l'envoi du nouveau système d'exploitation reçu vers l'élément sécurisé,
- une étape de désactivation dudit service pendant au moins l'étape de transmission,
lorsque lesdites instructions sont exécutées par le microprocesseur (21) du terminal (20).

9. Système comprenant au moins un élément sécurisé (30) selon l'une des revendications 1 à 7 et un dispositif de mise à jour (10) mémorisant la nouvelle version du système d'exploitation.

## Patentansprüche

1. Geschütztes Element (30), das mindestens einen Mikroprozessor (31), einen nicht flüchtigen Speicher (34) und eine Kommunikationsschnittstelle (36) umfasst, wobei das geschützte Element (30) geeignet ist, um mit einer Aktualisierungsvorrichtung (10) durch die Kommunikationsschnittstelle (36) zu kommunizieren, wobei der nicht flüchtige Speicher (34) mindestens ein Ladeprogramm (38) speichert, wobei der Mikroprozessor (31) dazu ausgestaltet ist, das Ladeprogramm (38) während eines Starts des geschützten Elements (30) auszuführen, **dadurch gekennzeichnet, dass** das Ladeprogramm (38) Anweisungen zur Ausführung umfasst von:
- einem Startschritt (E1, E12), um zu bestimmen, ob der nicht flüchtige Speicher (34) ein aktives Betriebssystem (35) speichert,
- einem Schritt zur Authentifizierung der Aktualisierungsvorrichtung (10), umfassend:
- eine Bestimmung (E6, E13) von ersten Authentifizierungsdaten (AUTH₃₀) in Abhängigkeit von einer Variablen (RAND) und einem Schlüssel (MKi), der in dem nicht flüchtigen Speicher (34) gespeichert ist, und
- einen Vergleich (E7, E14) der ersten Authentifizierungsdaten (AUTH₃₀) und zweiten Authentifizierungsdaten (AUTH₁₀), die von der Aktualisierungsvorrichtung (10) empfangen werden, dann
- wenn der nicht flüchtige Speicher (34) ein aktives Betriebssystem (35) speichert, einem Schritt (E15) zur Deaktivierung des Betriebssystems (35), und
- im Falle einer Authentifizierung der Aktualisierungsvorrichtung (10), einem Schritt (E9, E10) zur Speicherung eines neuen Betriebssystems, das von der Aktualisierungsvorrichtung (10) in dem nicht flüchtigen Speicher (34) empfangen wird und einem Schritt (E11) zur Aktivierung des neuen Betriebssystems,
wobei das geschützte Element, während die Anweisungen von dem Mikroprozessor (31) ausgeführt werden, ferner **dadurch gekennzeichnet ist, dass**:
- wenn der nicht flüchtige Speicher (34) ein aktives Betriebssystem (35) speichert, das Ladeprogramm (38) die Ausführung des Betriebssystems (35) startet, sodass das Betriebssystem die Ausführung von Anwendungen und die über die Kommunikationsschnittstelle (36) empfangenen Befehle verwaltet, und der Schritt zur Authentifizierung der Aktualisierungsvorrichtung (10) umfasst:
- ein Senden (F4) einer Nachricht (M5), welche die Variable (RAND) enthält, durch das Betriebssystem (35) zu der Aktualisierungsvorrichtung (10), und
- ein Empfangen (F5) der zweiten Authentifizierungsdaten (AUTH₁₀) durch das Betriebssystem (35),
- eine Abfrage des Ladeprogramms (38) durch das Betriebssystem (35), damit das Ladeprogramm (38) die zweiten Authentifizierungsdaten (AUTH₁₀) verifiziert,
- wenn das Betriebssystem (35) inaktiv ist, das Ladeprogramm (38) weiterhin die Kontrolle hat, sodass die über die Kommunikationsschnittstelle empfangenen Befehle von dem Ladeprogramm (38) verwaltet werden, und der Schritt zur Authentifizierung der Aktualisierungsvorrichtung umfasst:
- ein Senden (E4) einer Nachricht (M5), welche die Variable (RAND) enthält, durch das Ladeprogramm (38) zu der Aktualisierungsvorrichtung (10),
- ein Empfangen (E5) der zweiten Authentifizierungsdaten (AUTH₁₀) durch das Ladeprogramm (38).

2. Geschütztes Element (30) nach Anspruch 1, wobei das Ladeprogramm (38) Anweisungen zur Ausführung eines Sendeschritts (E8) einer Nachricht (M7), die verschlüsselte Daten (V1) enthält, in Abhängigkeit von dem Schlüssel (MKᵢ) und der Variablen (RAND) zu der Aktualisierungsvorrichtung (10) umfasst.

3. Geschütztes Element (30) nach Anspruch 1, wobei das Betriebssystem (35) Anweisungen zur Ausführung eines Sendeschritts (F8) einer Nachricht (M7), die verschlüsselte Daten (V1) enthält, in Abhängigkeit von dem Schlüssel (MKᵢ) und der Variablen (RAND) zu der Aktualisierungsvorrichtung (10) einschließt.

4. Geschütztes Element (30) nach einem der Ansprüche 1 bis 3, wobei der Schritt zur Speicherung das Empfangen des neuen Betriebssystems auf verschlüsselte Art und Weise umfasst.

5. Geschütztes Element (30) nach Anspruch 4, wobei der Schritt zur Authentifizierung die Bestimmung eines Sitzungsschlüssels (SK) in Abhängigkeit von dem Schlüssel (MKᵢ) und der Variablen umfasst, wobei der Schritt zur Speicherung das Empfangen des neuen verschlüsselten Betriebssystems mit dem Sitzungsschlüssel (SK) umfasst.

6. Geschütztes Element (30) nach einem der Ansprüche 1 bis 5, wobei das Ladeprogramm (38) in einem einmal beschreibbaren Teil (41) des nicht flüchtigen Speichers (34) gespeichert ist.

7. Geschütztes Element (30) nach einem der Ansprüche 1 bis 5, wobei das Ladeprogramm (38) in einem wiederbeschreibbaren Teil (40) des nicht flüchtigen Speichers (34) gespeichert ist, wobei der nicht flüchtige Speicher (34), ein Betriebssystem (35) enthält, das dazu ausgestaltet ist, die Schreibbefehle in dem Ladeprogramm (38) zu blockieren.

8. Endgerät (20), das mindestens einen Mikroprozessor (21), einen nicht flüchtigen Speicher (24) und ein geschütztes Element (30) nach einem der Ansprüche 1 bis 7 umfasst, wobei der nicht flüchtige Speicher (24) des Endgeräts (20) ein Programm (P1) zur Verwaltung der Aktualisierung und eine Anwendung (A1) umfasst, die dazu bestimmt ist, einen Dienst zu nutzen, der von dem geschützten Element (30) bereitgestellt wird, wobei das Programm (P1) zur Verwaltung der Aktualisierung Anweisungen zur Ausführung umfasst von:
- einem Schritt zur Übertragung, der das Empfangen des neuen Betriebssystems der Aktualisierungsvorrichtung (10) und das Senden des empfangenen neuen Betriebssystems zu dem geschützten Element umfasst,
- einem Schritt zur Deaktivierung des Dienstes zumindest während des Übertragungsschritts, wenn die Anweisungen von dem Mikroprozessor (21) des Endgeräts (20) ausgeführt werden.

9. System, das mindestens ein geschütztes Element (30) nach einem der Ansprüche 1 bis 7 und eine Aktualisierungsvorrichtung (10) umfasst, welche die neue Version des Betriebssystems speichert.

## Claims

1. A secure element (30) comprising at least a microprocessor (31), a non-volatile memory (34) and a communication interface (36), the secure element (30) being able to communicate with an update device (10) by the communication interface (36), the non-volatile memory (34) storing at least one bootstrap loader (38), the microprocessor (31) being configured to execute the bootstrap loader (38) when the secure element (30) is started up,
**characterized in that** the bootstrap loader (38) comprises instructions for executing:
- a startup step (E1, E12) to determine whether the non-volatile memory (34) is storing an active operating system (35),
- a step for authenticating the update device (10), comprising:
- determining (E6, E13) first authentication data (AUTH₃₀) based on a variable (RAND) and a key (MKᵢ) stored in said nonvolatile memory (34), and
- comparing (E7, E14) first authentication data (AUTH₃₀) and second authentication data (AUTH₁₀) received from the update device (10), then
- if the non-volatile memory (34) is storing an active operating system (35), a step (E15) for deactivating the operating system (35), and
- in case of authentication of the update device (10), a step (E9, E10) for storing a new operating system received from the update device (10) in the nonvolatile memory (34) and a step (E11) for activating the new operating system,
when said instructions are executed by the microprocessor (31),
the secure element further being **characterized in that**:
- if the nonvolatile memory (34) is storing an active operating system (35), the bootstrap loader (38) launches the execution of the operating system (35) such that the operating system manages the execution of applications and the commands received on the communication interface (36), and the step for authenticating the update device (10) comprises:
- sending (F4), by the operating system (35), a message (M5) containing the variable (RAND) to the update device (10), and
- reception (F5), by the operating system (35), of the second authentication data (AUTH10),
- querying, by the operating system (35), of the bootstrap loader (38) so that the bootstrap loader (38) verifies the second authentication data (AUTH10),
- if the operating system (35) is inactive, the bootstrap loader (38) remains master such that the commands received on the communication interface are managed by the bootstrap loader (38), and the step for authenticating the update device comprises:
- sending (E4), by the bootstrap loader (38), of a message (M5) containing the variable (RAND) to the update device (10),
- reception (E5), by the bootstrap loader (38), of the second authentication data (AUTH10).

2. The secure element (30) according to claim 1, wherein the bootstrap loader (38) comprises instructions for executing a step for sending (E8) a message (M7) containing a datum (V1) encrypted based on the key (MKᵢ) and said variable (RAND) to the update device (10).

3. The secure element (30) according to claim 1, wherein the operating system (35) includes instructions for executing a step for sending (F8) a message (M7) containing a datum (V1) encrypted using the key (MKᵢ) and said variable (RAND) to the update device (10).

4. The secure element (30) according to one of claims 1 to 3, wherein the storing step comprises receiving the new operating system in an encrypted manner.

5. The secure element (30) according to claim 4, wherein the authentication step comprises determining a session key (SK) based on said key (MKᵢ) and said variable, the storing step comprising receiving the new operating system encrypted with said session key (SK).

6. The secure element (30) according to one of claims 1 to 5, wherein the bootstrap loader (38) is stored in a write-once part (41) of the non-volatile memory (34).

7. The secure element (30) according to one of claims 1 to 5, wherein the bootstrap loader (38) is stored in a rewritable part (40) of the non-volatile memory (34), the non-volatile memory (34) containing an operating system (35) configured to block the write commands on the bootstrap loader (38).

8. A terminal (20) comprising at least a microprocessor (21), a non-volatile memory (24) and a secure element (30) according to one of claims 1 to 7, the non-volatile memory (24) of the terminal (20) comprising an update management program (P1) and an application (A1) intended to use a service provided by the secure element (30), the update management program (P1) comprising instructions for executing:
- a transmission step comprising receiving the new operating system from the update device (10) and sending the received new operating system to the secure element,
- a step for deactivating said service during at least the transmission step,
when said instructions are executed by the microprocessor (21) of the terminal (20).

9. A system comprising at least one secure element (30) according to one of claims 1 to 7 and an update device (10) storing the new version of the operating system.
